# EUROPEAN PATENT APPLICATION

(11) **EP 4 253 469 A1**
(43) Date of publication of application: **04.10.2023**
(21) Application number: 21897969.8
(22) Date of filing: 24.11.2021
(51) Int. Cl.: C08L 23/00, C08K 7/02, C08L 23/26, C08L 67/00, C08L 77/00

(54) **FIBER-REINFORCED RESIN COMPOSITION AND MOLDED ARTICLE**

(30) Priority: 24.11.2020 JP 2020194426
(71) Applicant: Mitsui Chemicals, Inc., Tokyo 104-0028 (JP)
(72) Inventor: KOMATSUBARA, Masashi, Sodegaura-shi, Chiba 299-0265 (JP); KOJIO, Kenji, Sodegaura-shi, Chiba 299-0265 (JP); NAKAMURA, Tomoya, Sodegaura-shi, Chiba 299-0265 (JP); TANAKA, Hirokazu, Sodegaura-shi, Chiba 299-0265 (JP)
(74) Representative: Hoffmann Eitle
(86) International application number: PCT/JP2021/042978
(87) International publication number: WO 2022/113997

(57) **Abstract**

A fiber-reinforced resin composition containing a polyolefin resin (A); one or more resins (B) selected from a polyamide resin (B1) and a polyester resin (B2); a fiber (C); and a modified polyolefin resin (D), in a specific proportion, wherein the ratio η_{A}/η_{B} of a melt viscosity η_{A} of the polyolefin resin (A) at 250°C and a shear rate of 120/sec to a melt viscosity η_{B} of the resin (B) at 250°C and a shear rate of 120/sec is in a range of 0.3 to 1.3. The present invention can provide a fiber-reinforced resin composition having excellent heat distortion resistance under high load, and having an excellent balance between heat distortion resistance and tensile creep resistance while containing a compatibilizer. In addition, the fiber-reinforced resin composition of the present invention having excellent impregnation properties into long glass fibers improves the interaction between the fiber and the resin composition, and contributes to the improvement of mechanical properties.

## Description

### Technical Field

The present invention relates to a fiber-reinforced resin composition and a molded article containing the same.

### Background Art

A fiber-reinforced resin obtained by dispersing various reinforced fibers in a thermoplastic resin has high strength, rigidity, impact resistance, and heat resistance, and is thus used in various applications. Patent Document 1 discloses a fiber-reinforced resin composition that includes polypropylene, polyamide or polyphenylene sulfide, and an aminosilane-treated glass fiber by combining them in a specific ratio, and the composition exhibits a high heat distortion temperature.

### Citation List

### Patent Document

Patent Document 1: JP 2003-231758A

### Summary of Invention

### Technical Problem

In material applications in which a large force is applied over a long time, the fiber-reinforced resin composition is required to have such a characteristic that the material is not deformed in a long time use. However, the fiber-reinforced resin composition of Patent Document 1 does not have a sufficiently high heat distortion temperature under high load. In addition, Patent Document 1 describes that the heat distortion temperature may not be improved when a compatibilizer such as a modified polypropylene resin is added to the fiber-reinforced resin composition. However, when a compatibilizer is not added, long-term physical properties (e.g., tensile creep resistance) may deteriorate. In addition, when these resin components used in the reinforced fiber resin composition have excellent impregnation properties into fibers, the interaction between the fibers and the resin components is made strong, and therefore, the improvement of impregnation properties is essential for the improvement of mechanical properties, heat resistance, and durability.

An object of the present invention is to provide a fiber-reinforced resin composition which has excellent heat distortion resistance under high load and an excellent balance between heat distortion resistance and tensile creep resistance while containing a compatibilizer, and in which the resin components contained have excellent impregnation properties into reinforced fibers.

### Solution to Problem

The present inventors have studied to solve the above problems, and as a result, found that the above problems can be solved by the fiber-reinforced resin compositions described below, thereby completing the present invention. The present invention relates to the following [1] to [8].
[1] A fiber-reinforced resin composition comprising:
   a polyolefin resin (A);
   one or more resins (B) selected from the group consisting of a polyamide resin (B1) and a polyester resin (B2) ;
   a fiber (C); and
   a modified polyolefin resin (D),
   wherein
   a content of the polyolefin resin (A) is 5 to 60 parts by mass, a content of the resin (B) is 5 to 60 parts by mass, and a content of the fiber (C) is 10 to 70 parts by mass per 100 parts by mass of a total content of the polyolefin resin (A), the resin (B), and the fiber (C);
   a content of the modified polyolefin resin (D) is 0.05 to 0.95 parts by mass per 100 parts by mass of the total content of the polyolefin resin (A), the resin (B), and the fiber (C); and
   a ratio η_{A}/η_{B} of a melt viscosity η_{A} of the polyolefin resin (A) at 250°C and a shear rate of 120/sec to a melt viscosity η_{B} of the resin (B) at 250°C and a shear rate of 120/sec is in a range of 0.3 to 1.3.
[2] The fiber-reinforced resin composition according to [1], wherein the resin (B) is the polyamide resin (B1).
[3] The fiber-reinforced resin composition according to [1] or [2], wherein the polyamide resin (B1) is polyamide 6.
[4] The fiber-reinforced resin composition according to any one of [1] to [3], wherein the content of the resin (B) is 8 to 92 parts by mass per 100 parts by mass of a total content of the polyolefin resin (A) and the resin (B).
[5] The fiber-reinforced resin composition according to any one of [1] to [4], wherein the polyolefin resin (A) is polypropylene.
[6] The fiber-reinforced resin composition according to any one of [1] to [5], wherein the fiber (C) is one or more selected from a glass fiber and a carbon fiber.
[7] A molded article comprising the fiber-reinforced resin composition according to any one of [1] to [6].
[8] The molded article according to [7], wherein the molded article is an automobile part.

### Advantageous Effects of Invention

The present invention can provide a fiber-reinforced resin composition having excellent heat distortion resistance under high load, and having an excellent balance between heat distortion resistance and tensile creep resistance while containing a compatibilizer. In addition, the fiber-reinforced resin composition of the present invention having excellent impregnation properties into long glass fibers improves the interaction between the fiber and the resin composition, and contributes to the improvement of mechanical properties.

### Brief Description of Drawing

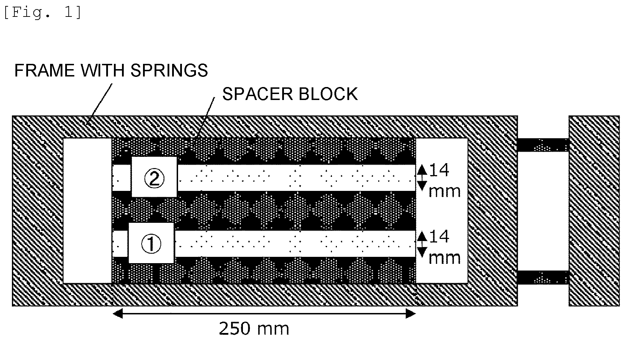

[Figure 1] Figure 1 is a schematic drawing of a mold used in Examples for the evaluation of impregnation properties.

### Description of Embodiments

The present invention will be described further in detail below.

As used herein, the numerical value range represented by using "to" means a range including the numerical values described before and after "to" as the lower limit value and the upper limit value.

### [Fiber-Reinforced Resin Composition]

The fiber-reinforced resin composition of the present embodiment (hereinafter, also referred to as "the composition (I)") comprises
a polyolefin resin (A);
one or more resins (B) selected from a polyamide resin (B1) and a polyester resin (B2);
a fiber (C); and
a modified polyolefin resin (D).

### <Polyolefin Resin (A)>

Examples of the polyolefin resin (A) (hereinafter, also referred to as the "resin (A)") include polymers of olefins such as an α-olefin, a cyclic olefin, a non-conjugated diene, and an aromatic olefin, and a polymer having an α-olefin as a main component is preferred. The polymer having an α-olefin as a main component means that the content of the constitutional unit derived from the α-olefin in the polymer is preferably 50 mol% or more, more preferably 60 mol% or more, and further preferably 70 mol% or more. The content of the above constitutional unit can be measured, for example, by a ¹³C-NMR method.

Examples of the α-olefin include an α-olefin having 2 to 20 carbon atoms, preferred examples thereof include an α-olefin having 2 to 10 carbon atoms, and more preferred examples thereof include an α-olefin having 2 to 8 carbon atoms. Specific examples thereof include ethylene, propylene, 1-butene, 1-pentene, 1-hexene, 1-heptene, 1-octene, 3-methyl-1-butene, and 4-methyl-1-pentene. The α-olefin may be used alone or two or more thereof may be used.

As the polyolefin resin (A), polyethylene such as an ethylene homopolymer and a copolymer of ethylene and other α-olefins; or polypropylene such as a propylene homopolymer and a copolymer of propylene and other α-olefins is preferred, polypropylene is more preferred, and a propylene homopolymer is particularly preferred. The content of the constitutional unit derived from ethylene in polyethylene is preferably 50 mol% or more, more preferably 70 mol% or more, and further preferably 90 mol% or more.

As the polyolefin resin (A), polypropylene is preferred. The melting point of polypropylene measured by a differential scanning calorimeter (temperature rising rate: 10°C/min) is preferably 130°C or more, more preferably 140°C or more, and preferably 180°C or less, more preferably 170°C or less.

The melt flow rate (MFR) of the polyolefin resin (A) (in accordance with JIS K7210, 2.16 kg load) is preferably 0.01 g/10 min or more, more preferably 0.1 g/10 min or more, further preferably 1 g/10 min or more, further preferably 10 g/10 min or more, particularly preferably 50 g/10 min or more, and more preferably 300 g/10 min or less. The measurement temperature of MFR is different depending on the kind of polymer, and for example, is typically 230°C in the case of polypropylene and typically 190°C in the case of polyethylene. To make the impregnation properties into the reinforced fiber good, the melt viscosity η_{A} of the polyolefin resin (A) at 250°C and a shear rate of 120/sec is preferably 30 Pa·s or more, and preferably 160 Pa·s or less, more preferably 100 Pa·s or less.

The resin (A) may be used alone or two or more thereof may be used. That is, as the resin (A), one of the above olefin polymers may be used alone, or the resin (A) may be a mixture of two or more of the above olefin polymers.

### <Resin (B)>

The resin (B) is one or more resins selected from the group consisting of a polyamide resin (B1) and a polyester resin (B2), and the polyamide resin (B1) is preferred. The resin (B) is a component that improves the heat resistance, long-term durability, and mechanical properties of the molded article containing the composition (I).

The melt viscosity η_{B} of the resin (B) at 250°C and a shear rate of 120/sec is preferably 100Pa·s or more, and preferably 200 Pa·s or less, more preferably 120 Pa·s or less.

### <<Polyamide Resin (B1)>>

Examples of the polyamide resin (B1) include a polymer of one or more amino acid-based monomers selected from compounds having an amino group and a carboxy group and dehydrated condensates thereof; a copolymer of diamine and dicarboxylic acid; and a copolymer of the above amino acid-based monomer, diamine, and dicarboxylic acid.

Examples of the above amino acid-based monomer include amino acids such as aminocaproic acid, aminoundecanoic acid, aminododecanoic acid, and paraaminomethylbenzoic acid; and lactams such as ε-caprolactam, undecane lactam, and ω-lauryl lactam. The above amino acid-based monomer may be used alone or two or more thereof may be used.

Examples of the diamine include aliphatic diamines such as ethylenediamine, 1,3-diaminopropane, 1,4-diaminobutane, 1,6-diaminohexane, 1,7-diaminoheptane, 1,8-diaminooctane, 1,9-diaminononane, 1,10-diaminodecane, 1,11-diaminoundecane, 1,12-diaminododecane, 1,13-diaminotridecane, 1,14-diaminotetradecane, 1,15-diaminopentadecane, 1,16-diaminohexadecane, 1,17-diaminoheptadecane, 1,18-diaminooctadecane, 1,19-diaminononadecane, 1,20-diaminoeicosane, 2-methyl-1,5-diaminopentane (2M-5), and 2-methyl-1,8-diaminooctane (2M-8); cycloaliphatic diamines such as cyclohexane diamine and bis-(4-aminocyclohexyl)methane; and aromatic diamines such as xylylene diamine (e.g., p-phenylenediamine and m-phenylenediamine). The diamine may be used alone or two or more thereof may be used.

Examples of the dicarboxylic acid include aliphatic dicarboxylic acids such as oxalic acid, malonic acid, succinic acid, glutaric acid, adipic acid, pimelic acid, suberic acid, azelaic acid, sebacic acid, undecanedioic acid, dodecanedioic acid, brasylic acid, tetradecanedioic acid, pentadecanedioic acid, and octadecanedioic acid; cycloaliphatic dicarboxylic acids such as cyclohexane dicarboxylic acid; and aromatic dicarboxylic acids such as phthalic acid, terephthalic acid, isophthalic acid, and naphthalene dicarboxylic acid. The dicarboxylic acid may be used alone or two or more thereof may be used.

Specific examples of the polyamide resin (B1) include polyamide 6, polyamide 66, polyamide 610, polyamide 612, polyamide 614, polyamide 11, polyamide 12, polyamide 6T, polyamide 6I, polyamide 9T, polyamide M5T, polyamide 1010, polyamide 1012, polyamide 10T, polyamide MXD6, polyamide 6T/66, polyamide 6T/6I, polyamide 6T/6I/66, polyamide 6T/2M-5T, and polyamide 9T/2M-8T. Among these, polyamide 6 or polyamide 66 is preferred, and polyamide 6 is more preferred.

MFR of the polyamide resin (B1) (in accordance with JIS K7210, 2.16 kg load) is preferably 1 g/10 min or more, more preferably 5 g/10 min or more, further preferably 10 g/10 min or more, further more preferably 20 g/10 min or more, and particularly preferably 60 g/10 min or more. When the above MFR value is a certain value or more, the impregnation properties of the resin components (that is, among the components constituting the composition (I), the components other than the fiber (C), including the resin (A), the resin (B), and the resin (D) described below) into the fiber (C) described below tend to be excellent in forming the composition (I). On the other hand, the MFR is preferably 500 g/10 min or less, more preferably 300 g/10 min or less, and further preferably 100 g/10 min or less. The measurement temperature of MFR is different depending on the kind of polymer, and for example, is typically 230°C in the case of polyamide 6 and typically 270°C in the case of polyamide 66.

The melting point of the polyamide resin (B1) measured by a differential scanning calorimeter (temperature rising rate: 10°C/min) is preferably 200°C or more, more preferably 210°C or more, further preferably 220°C or more, and preferably 300°C or less, more preferably 280°C or less, further preferably 270°C or less.

The polyamide resin (B1) may be used alone or two or more thereof may be used.

### <<Polyester Resin (B2)>>

The polyester resin (B2) is a copolymer of one or more selected from polycarboxylic acids and anhydrides thereof with a polyol, is a resin having a hydrophilic group in the molecular skeleton including terminals, and can be produced by a known method. Examples of the hydrophilic group include a polyalkylene oxide group, a sulfonate, a carboxy group, and neutralized salts thereof.

Examples of the polycarboxylic acid and anhydride thereof include aromatic dicarboxylic acids, sulfonatecontaining aromatic dicarboxylic acids, aliphatic dicarboxylic acids, cycloaliphatic dicarboxylic acids, trifunctional or higher polycarboxylic acids, and anhydrides thereof.

Examples of the aromatic dicarboxylic acid and anhydride thereof include phthalic acid, terephthalic acid, isophthalic acid, orthophthalic acid, 1,5-naphthalenedicarboxylic acid, 2,6-naphthalenedicarboxylic acid, and phthalic anhydride.

Examples of the sulfonate salt-containing aromatic dicarboxylic acid include sulfoterephthlate salts, 5-sulfoisophthalate salts, and 5-sulfoorthophthalate salts.

Examples of the aliphatic dicarboxylic acid and the cycloaliphatic dicarboxylic acid, and anhydrides thereof include fumaric acid, maleic acid, itaconic acid, succinic acid, adipic acid, azelaic acid, sebacic acid, dimer acid, 1,4-cyclohexane dicarboxylic acid, succinic anhydride, and maleic anhydride.

Examples of the trifunctional or higher polycarboxylic acid and anhydride thereof include trimellitic acid, pyromellitic acid, trimellitic anhydride, and pyromellitic dianhydride.

Examples of the polyol include diols, and trifunctional or higher polyols. Examples of the diol include ethylene glycol, diethyleneglycol, polyethylene glycol, propylene glycol, polypropylene glycol, polybutylene glycol, 1,3-propanediol, 1,4-butanediol, 1,6-hexanediol, neopentyl glycol, polytetramethylene glycol, 1,4-cyclohexanediol, 1,4-cyclohexanedimethanol, bisphenol A, and alkylene oxide adducts of bisphenol A. Examples of the trifunctional or higher polyol include trimethylol propane, glycerin, and pentaerythritol.

The polyester resin (B2) may be a polymer of one or more monomers selected from compounds having a hydroxy group and a carboxy group, and dehydrated condensates thereof. Examples of the compound having a hydroxy group and a carboxy group include lactic acid.

Specific examples of the polyester resin (B2) include polybutylene terephthalate, polyethylene terephthalate, polybutylene succinate, polyethylene succinate, and polylactic acid.

MFR (in accordance with JIS K7210, 2.16 kg load) of the polyester resin (B2) is preferably 0.1 g/10 min or more, and more preferably 1 g/10 min or more. On the other hand, the MFR is preferably 100 g/10 min or less. The measurement temperature of MFR is different depending on the kind of polymer, and for example, is typically 230°C in the case of polybutylene terephthalate and typically 270°C in the case of polyethylene terephthalate.

The melting point of the polyester resin (B2) measured by a differential scanning calorimeter (temperature rising rate: 10°C/min) is preferably 200°C or more, more preferably 210°C or more, and preferably 300°C or less, more preferably 280°C or less.

The polyester resin (B2) may be used alone or two or more thereof may be used.

### <Fiber (C)>

The composition (I) contains a fiber (C) that is a reinforced fiber.

As the fiber (C), either organic fibers or inorganic fibers may be used. Examples thereof include glass fibers; carbon fibers; metal fibers such as aluminum fiber, aluminum alloy fiber, copper fiber, brass fiber, steel fiber, stainless steel fiber, and titanium fiber; natural fibers such as cotton fiber, silk fiber, woody fiber, and cellulose fiber; ceramic fibers such as silicon carbide fiber, silicon nitride fiber, alumina fiber, and zirconia fiber; synthetic fibers made of a synthetic resin, such as wholly aromatic polyamide (aramid), wholly aromatic polyester, wholly aromatic polyester amide, wholly aromatic polyether, wholly aromatic polycarbonate, wholly aromatic polyazomethine, polyphenylene sulfide, polyparaphenylenebenzobisoxazole, poly(para-phenylenebenzobisthiazole), polybenzimidazole, polyether ether ketone, polyamide-imide, polyimide, polytetrafluoroethylene, polyvinyl alcohol, polyolefin, polyarylate, and a fluorine-based polymer. Among them, glass fibers and carbon fibers are preferred, and glass fibers are more preferred.

The fiber (C) may be short fibers or long fibers. The short fibers may be chopped fiber (cut fiber)-like short fibers or pulp-like short fibers having fibrils. In addition, the fiber (C) may be single fibers or twists of a plurality of single fibers.

The average fiber length of the fiber (C) is preferably 0.01 mm or more, more preferably 0.1 mm or more, further preferably 1 mm or more, and preferably 100 mm or less, more preferably 50 mm or less, further preferably 30 mm or less. With such an aspect, the effect of reinforcing mechanical properties by the reinforced fiber tends to be sufficiently exerted, and the dispersibility of the reinforced fiber in the composition, and furthermore, the appearance tend to be good. The proportion of the number of fibers having a fiber length of less than 0.1 mm is preferably 18% or less based on the total number of reinforced fibers.

The average fiber diameter of the fiber (C) is preferably 1 µm or more, more preferably 5 µm or more, and preferably 30 µm or less, more preferably 20 µm or less. With such an aspect, the reinforced fiber is less likely to be broken during molding, the impact strength of the molded article to be obtained tends to be high, and the appearance of the molded article is good, so that a sufficient effect of reinforcing mechanical properties such as rigidity and heat resistance of the molded article tends to be obtained.

The average fiber length and average fiber diameter can be determined by, for example, taking an image of reinforced fibers with an optical microscope, measuring the length or diameter of 100 reinforced fibers that are randomly selected in the image obtained, and arithmetically averaging the lengths or diameters thereof.

Examples of the glass fibers include fibers made of a glass composition such as A-glass, C-glass, D-glass, E-glass, and S-glass, and in particular, fibers made of a glass composition of E-glass (alkali-free glass) are preferred.

The glass fibers may be single fibers or twists of a plurality of single fibers. The form of the glass fibers may be, for example, any of "glass roving" obtained by continuously winding single fibers or twists of a plurality of single fibers, "chopped strand" which is obtained by cutting fibers into a length of 1 to 10 mm, and "milled fiber" which is obtained by pulverizing fibers into a length of about 10 to 500 µm.

As the carbon fiber, various known carbon fibers may be used, and examples thereof include polyacrylonitrile-based, rayon-based, pitch-based, polyvinyl alcohol-based, and regenerated cellulose-based carbon fibers, and pitch-based carbon fibers produced from mesophase pitch. The carbon fibers may be general-purpose fibers or high-strength fibers. In addition, the carbon fibers may be long fibers, short fibers, or recycled fibers.

As the natural fibers, cellulose fibers are preferred. As the cellulose fibers, cellulose nanofibers, lignocellulose nanofibers, and cellulose microfibers are preferred.

The fiber (C) may be the above-described fibers per se (that is, the fibers not subjected to surface treatment; hereinafter, referred to as "fiber (C0)"), or fibers obtained by subjecting the above-described fibers to surface treatment (hereinafter, referred to as "surface-treated fiber (C1)"). For example, the "surface-treated fiber (C1) " may be fibers subjected to surface treatment by using various sizing agents (hereinafter, referred to as "sizing agent-treated fiber (C1A)"). The "sizing agent-treated fiber (C1A) " contains the fiber (C0), and a sizing agent that coats the fiber (C0), in many cases. As the sizing agent, for example, an acrylbased sizing agent, a urethane-based sizing agent, and an acid copolymer-based sizing agent may be used. Among them, an acid copolymer-based sizing agent is preferred.

Here, when the "sizing agent-treated fiber (C1A)" is a glass fiber roving subjected to surface treatment by using a sizing agent (hereinafter, referred to as the "sizing agent-treated glass fiber roving"), the sizing agent that constitutes the "sizing agent-treated glass fiber roving" is preferably an acid copolymer-based sizing agent, from the standpoint that the impregnation of the resin components into the sizing agent-treated fiber is sufficiently carried out. In addition, an acrylic sizing agent is also one of the preferable sizing agents.

On the other hand, when the "sizing agent-treated fiber (C1A)" is a fiber other than the "sizing agent-treated glass fiber roving", for example, a chopped strand subjected to surface treatment by using a sizing agent (hereinafter, referred to as the "sizing agent-treated chopped strand"), the sizing agent that constitutes the "sizing agent-treated chopped strand" is not limited to the acid copolymer-based sizing agent, and may be a sizing agent other than the acid copolymer-based sizing agent, such as an acrylic sizing agent and a urethane-based sizing agent. Such a "sizing agent-treated chopped strand" containing a sizing agent other than the acid copolymer-based sizing agent is also preferred because the impregnation of the resin components is sufficiently carried out as in the "sizing agent-treated chopped strand" containing an acid copolymer-based sizing agent.

If necessary, one or more components selected from a silane-based coupling agent, a titanate-based coupling agent, an aluminum-based coupling agent, a zirconium-based coupling agent, a borane-based coupling agent, a curing catalyst, a lubricant, a filler, a thixotropic agent, a tackifier, a wax, a thermal stabilizer, a light stabilizer, a fluorescent brightening agent, a foaming agent, a pH regulator, a leveling agent, an antigelling agent, a dispersion stabilizer, an antioxidant, a radical scavenger, a heat resistance imparting agent, an inorganic filler, an organic filler, a plasticizer, a reinforcing agent, an antimicrobial agent, an antifungal agent, an anticorrosive, a thermoplastic resin, a thermosetting resin, a pigment, a dye, a conductivity imparting agent, an antistatic agent, a permeability improving agent, a water repellent agent, an oil repellent agent, a hollow foam, a crystal water-containing compound, a flame retardant agent, a water absorbent, a moisture absorbent, a deodorant, a foam stabilizer, a defoaming agent, a mildew-proofing agent, a preservative, an algae-proofing agent, a pigment dispersant, an antiblocking agent, and a hydrolysis inhibitor may be contained.

Examples of the surface treatment method of the reinforced fiber using a sizing agent include a method for applying a sizing agent to the surface of the reinforced fiber by, for example, an applicator; a method for immersing the reinforced fiber in a sizing agent; a method for spraying a sizing agent in a mist form to the reinforced fiber; and a method for bringing the reinforced fiber into contact with a roller attached with a sizing agent. The above surface treatment methods may be in either batch or continuous mode.

In the case of the fiber (C) subjected to surface treatment by using a sizing agent, the mass proportion of the sizing agent in the fiber (C), that is, ignition loss is preferably 0.1 to 1.5% by mass. For example, the mass proportion (ignition loss) of the sizing agent is measured with respect to the fibers obtained by applying the sizing agent to the reinforced fiber, for example, by an applicator and completely evaporating volatile substances by drying. An ignition loss of the sizing agent applied to the reinforced fiber surface of 0.1% by mass or more is preferred because the interface between the above-described resin (B) and fiber (C) can be stabilized and heat resistance can be exerted. On the other hand, an ignition loss of the sizing agent applied to the reinforced fiber surface of 1.5% by mass or less is preferred because the improvement of physical properties such as heat resistance can be observed.

The ignition loss of the sizing agent in the fiber (C) is a value measured in accordance with JIS R 3420(2006)7.3.2.

The reinforced fibers after surface treatment are collected to be a predetermined number and wound, and then may be cut and/or pulverized and processed into, for example, a chopped strand, a milled fiber, a yarn, or a roving, if necessary.

The fiber (C) may be used alone or two or more thereof may be used.

### <Modified Polyolefin Resin (D)>

The modified polyolefin resin (D) is a component that improves the interaction between the polyolefin resin (A) and the resin (B) (e.g., functions as the compatibilizer of the resin (A) and the resin (B)) and improves the heat distortion resistance and tensile creep resistance of a molded article containing the composition (I).

The modified polyolefin resin (D) is, for example, a resin obtained by modifying the polyolefin resin (D1) with one or more components (D2) selected from unsaturated carboxylic acids and derivatives thereof.

As the polyolefin resin (D1), polyolefin resins described in the item of <Polyolefin Resin (A)> can be used, and polypropylene is preferred. Other examples of the preferable polyolefin resin that may be used as the polyolefin resin (D1) include ethylene-butene copolymers, SEBS, and polyethylene.

The polyolefin resin (D1) that can be used in the present invention may be alone or in combination of two or more.

Examples of the unsaturated carboxylic acid that may be used as the component (D2) include unsaturated monocarboxylic acids such as acrylic acid, methacrylic acid, crotonic acid, sorbic acid, and angelic acid; and unsaturated dicarboxylic acids such as maleic acid, fumaric acid, itaconic acid, citraconic acid, mesaconic acid, tetrahydrophthalic acid, norbornenedicarboxylic acid, and bicyclo[2.2.1]hept-2-ene-5,6-dicarboxylic acid.

Examples of the derivative of the unsaturated carboxylic acid that may be used as the component (D2) include acid anhydrides, acid halides, esters, amides, imides, and metal salts of unsaturated carboxylic acids, and specific examples thereof include
unsaturated dicarboxylic acid anhydrides such as maleic anhydride, itaconic anhydride, citraconic anhydride, tetrahydrophthalic anhydride, and bicyclo[2.2.1]hept-2-ene-5,6-dicarboxylic acid anhydride;
unsaturated dicarboxylic acid anhydrides such as maleic chloride;
acrylic acid esters such as methyl acrylate, ethyl acrylate, propyl acrylate, and butyl acrylate, methacrylic acid esters such as methyl methacrylate and glycidyl methacrylate, maleic acid esters such as monomethyl maleate, monoethyl maleate, dimethyl maleate, and diethyl maleate, diethyl fumarate, dimethyl itaconate, diethyl citraconate, dimethyl tetrahydrophthalate, and dimethyl bicyclo[2.2.1]hept-2-ene-5,6-dicarboxylate; and
acrylamide, maleic acid amide, maleimide, sodium acrylate, and sodium methacrylate.

Among them, unsaturated dicarboxylic acids and derivatives thereof are preferred, unsaturated dicarboxylic acids and anhydrides thereof are more preferred, and maleic acid and a maleic anhydride are further preferred. A combination of an acrylic acid ester and glycidyl methacrylate is also one of preferred examples.

The component (D2) may be used alone or two or more thereof may be used.

As the modification method, a conventionally known method may be used, and examples thereof include a method for grafting the component (D2) to the polyolefin resin (D1). Specifically, the component (D2) is grafted to the polyolefin resin (D1) which is the graft main chain, in the presence of a radical polymerization initiator.

As the grafting method, a conventionally known method may be used, and examples thereof include a solution method and a melt-kneading method. Examples thereof include a method for carrying out graft polymerization by suspending or dissolving the polyolefin resin (D1) in a solvent, adding the component (D2) and a radical polymerization initiator thereto usually at a temperature of 80 to 200°C, and mixing them; and a method for bringing the component (D2) and a radical polymerization initiator into contact with each other at the melting point of the polyolefin resin (D1) or more, for example, at a temperature of 180 to 300°C under melt-kneading.

Examples of the above solvent used in the solution method include aromatic hydrocarbon-based solvents such as toluene and xylene; aliphatic hydrocarbon-based solvents such as hexane, heptane, octane, and decane; alicyclic hydrocarbon-based solvents such as cyclohexane and methylcyclohexane; chlorinated hydrocarbon-based solvents such as trichloroethylene, perchloroethylene, dichloroethylene, dichloroethane, and chlorobenzene; aliphatic alcohol-based solvents such as ethanol and isopropanol; ketone-based solvents such as acetone, methyl isobutyl ketone, and methyl ethyl ketone; and ester-based solvents such as methyl acetate, ethyl acetate, and butyl acetate. The solvent may be used alone or two or more thereof may be used.

Examples of the radical initiator include organic peroxides and azo compounds. Examples of the organic peroxide include benzoyl peroxide, 2,4-dichlorobenzoyl peroxide, m-toluoyl peroxide, di-t-butyl peroxide, dicumyl peroxide, (2,5-dimethyl-2,5-bis(t-butylperoxy)hexane, 2,5-dimethyl-2,5-bis(t-butylperoxy)hexine-3, lauroyl peroxide, t-butyl peroxyacetate, 2,5-dimethyl-2,5-di(benzoylperoxy)hexane, t-butyl peroxybenzoate, t-butyl peroxyisobutyrate, t-butyl peroxyphenylacetate, t-butylperoxy-s-octate, t-butyl peroxypivalate, cumyl peroxypivalate, and t-butyl peroxyethyl acetate. Examples of the azo compound include azoisobutyronitrile and dimethylazoisobutyrate. The radical polymerization initiator may be used alone or two or more thereof may be used.

The modified polyolefin resin (D) may be obtained by, for example, copolymerizing an olefin with the component (D2). As the olefin, an olefin in the case of forming the above-described polyolefin resin (D1) may be used. As the copolymerization method, a conventionally known radical copolymerization method may be used.

The content of a structure derived from the component (D2) in the modified polyolefin resin (D) is preferably 0.1% by mass or more, more preferably 0.2% by mass or more, and preferably 5% by mass or less, more preferably 1% by mass or less. For example, in the case of a maleic acid-modified polyolefin resin, the above content can be determined by measuring the infrared absorption spectrum of the resin and using a calibration curve separately formed based on the peak area at 1670 to 1810 cm⁻¹. Also, in the case of using the component (D2) other than the maleic acid, the above content can be determined, for example, by infrared absorption spectroscopy.

As the modified polyolefin resin (D), one or more resins selected from modified polypropylene and modified polyethylene are preferred, one or more resins selected from maleic acid-modified polypropylene, maleic anhydride-modified polypropylene, maleic acid-modified polyethylene, and maleic anhydride-modified polyethylene are more preferred, and one or more resins selected from maleic acid-modified polypropylene and maleic anhydride-modified polypropylene are further preferred.

The modified polyolefin resin (D) may be used alone or two or more thereof may be used.

### <Other components>

The composition (I) may contain other components other than the above components, within a range not inhibiting the object of the present invention. Examples of other components include other thermoplastic resins other than the polyolefin resin (A), the resin (B), and the modified polyolefin resin (D), a flame retardant, a flame-retardant auxiliary, a filler, a colorant, an antimicrobial agent, and an antistatic agent. These may be used alone or two or more thereof may be used.

Examples of the other thermoplastic resins include styrene-based thermoplastic elastomers such as styrenebutadiene-styrene copolymers (SBS), styrene-isoprene-styrene copolymers (SIS), styrene-ethylene/butylene-styrene copolymers (SEBS), and styrene-ethylene/propylene-styrene copolymers (SEPS).

Examples of the flame retardant include halogen-based flame retardants (e.g., halogenated aromatic compounds), phosphorus-based flame retardants (e.g., nitrogen-containing phosphate compounds and phosphoric acid esters), nitrogenbased flame retardants (e.g., guanidine, triazine, melamine, and derivatives thereof), inorganic-based flame retardants (e.g., metal hydroxides), boron-based flame retardants, silicone-based flame retardants, sulfur-based flame retardants, and red phosphorus-based flame retardants.

Examples of the flame-retardant auxiliary include various antimony compounds, metal compounds containing zinc, metal compounds containing bismuth, magnesium hydroxides, and clay silicates.

Examples of the filler include glass components (e.g., glass beads and glass flakes), silica, graphite, silicic acid compounds (e.g., calcium silicate, aluminum silicate, kaolin, talc, and clay), metal oxides (e.g., iron oxides, titanium oxides, zinc oxides, antimony oxides, and alumina), and carbonates and sulfates of metals such as calcium, magnesium, and zinc.

Examples of the colorant include pigments and dyes.

### <Content of each Component>

By using the composition (I), a molded article having excellent tensile creep resistance, flexural modulus, and flexural strength can be produced while maintaining high heat distortion resistance under high load.

The preferable contents of the components in the composition (I) are as follows.

The content of the resin (A) is 5 parts by mass or more, preferably 10 parts by mass or more, more preferably 15 parts by mass or more; and 60 parts by mass or less, preferably 50 parts by mass or less, more preferably 40 parts by mass or less, further preferably 33 parts by mass or less, especially preferably 27 parts by mass or less per 100 parts by mass of the total content of the resin (A), the resin (B), and the fiber (C). When the content of the resin (A) is 5 to 60 parts by mass, the cost and specific gravity are excellent.

The content of the resin (B) is 5 parts by mass or more, preferably 10 parts by mass or more; and 60 parts by mass or less, preferably 50 parts by mass or less per 100 parts by mass of the total content of the resin (A), the resin (B), and the fiber (C). When the content of the resin (B) is 5 to 60 parts by mass, the molded article to be obtained has excellent heat resistance and tensile creep resistance.

The content of the fiber (C) is 10 parts by mass or more, preferably 20 parts by mass or more, more preferably 30 parts by mass or more, further preferably 35 parts by mass or more; and 70 parts by mass or less, preferably 60 parts by mass or less per 100 parts by mass of the total content of the resin (A), the resin (B), and the fiber (C). When the content of the fiber (C) is 10 to 70 parts by mass, the molded article to be obtained has excellent flexural modulus and flexural strength.

The content of the modified polyolefin resin (D) is 0.05 parts by mass or more, preferably 0.1 parts by mass or more; and 0.95 parts by mass or less, preferably 0.7 parts by mass or less, more preferably 0.5 parts by mass or less per 100 parts by mass of the total content of the resin (A), the resin (B), and the fiber (C). When the content of the modified polyolefin resin (D) is the lower limit value or more and the upper limit value or less, for example, 0.05 to 0.95 parts by mass, the high heat distortion resistance under high load of the molded article is maintained and the tensile creep resistance of the molded article is improved, as compared with the case where the content is outside this range.

The content of the resin (B) is preferably 8 parts by mass or more, more preferably 20 parts by mass or more, further preferably 33 parts by mass or more, further more preferably 45 parts by mass or more, particularly preferably 55 parts by mass or more; and preferably 92 parts by mass or less, more preferably 80 parts by mass or less, further preferably 75 parts by mass or less per 100 parts by mass of the total content of the resin (A) and the resin (B). When the content of the resin (B) based on the total content of the resin (A) and the resin (B) is the lower limit value or more and the upper limit value or less, for example, 8 to 92 parts by mass, the molded article to be obtained has excellent heat resistance and tensile creep resistance.

The total content of the resin (A), the resin (B), the fiber (C), and the modified polyolefin resin (D) is preferably 70% by mass or more, more preferably 80% by mass or more, and further preferably 90% by mass or more per 100% by mass of the composition (I).

### <Ratio and Range of Melt Viscosity>

It is preferred that, in the composition (I), the ratio η_{A}/η_{B} of the melt viscosity η_{A} of the resin (A) at 250°C and a shear rate of 120/sec to the melt viscosity η_{B} of the resin (B) at 250°C and a shear rate of 120/sec be in a range of 0.3 to 1.3, and the viscosity range of a composition obtained by melt-kneading only the resin components other than the fiber (C) in the composition (I) be 40 to 130 Pa·s. Within the above range, the impregnation properties of the resin into the reinforced fiber are excellent, that is, the resin exists in peripheral parts of the reinforced fiber in a high ratio. Hence, the mechanical properties of the composition (I) are excellent.

### <Method for Producing Fiber-Reinforced Resin Composition>

The composition (I) may be produced by melt-kneading the above-described components. The melt-kneading temperature is a temperature, for example, 5 to 100°C higher than the temperature at which the resins as the components contained (e.g., the resin (A), the resin (B), and the resin (D)) melt, and is preferably a temperature 10 to 60°C higher than the melting point of a resin that has the highest melting point among the resins as the components contained. The melt-kneading treatment time is, for example, 30 seconds or more and 15 minutes or less, and preferably 1 to 10 minutes.

The composition (I) may be a short fiber-reinforced resin pellet or a long fiber-reinforced resin pellet.

When the composition (I) is the short fiber-reinforced resin pellet, it can be produced by melt-kneading and dispersing the above components by, for example, a roll mill, a Banbury mixer, or a kneader, for example, in an extruder. The above components may be dry blended by, for example, a tumbler blender, a Henschel mixer, or a ribbon mixer, and melt-kneaded, for example, in a uniaxial extruder or a biaxial extruder to form a molding material in pellet form. In this method, the fiber (C) may be charged from either the top or side of the extruder. In this method, the whole or a part of the components other than the fiber (C) may be separately melt-kneaded, and then melt-kneaded with the fiber (C) .

When the composition (I) is the long fiber-reinforced resin pellet, it can be produced by a known method such as a drawing method. After separately melt-kneading a part of the above components, the remaining components may be added thereto and melt-kneaded. For example, pelletization can be carried out by leading the glass fiber roving to an impregnation die, uniformly impregnating the molten resin into filaments, and then cutting the roving into a necessary length.

### [Molded Article]

The composition (I) may be processed into a molded article by a molding method such as usual injection molding, extrusion, and press molding. In the case of injection molding, injection molding can be carried out by using, for example, the above-described short fiber-reinforced resin pellet or long fiber-reinforced resin pellet. In this case, when the short fiber-reinforced resin pellet or long fiber-reinforced resin pellet is fed from the hopper of an injection molding machine, other resins, for example, a polyolefin resin described in the item of <Polyolefin Resin (A)> may be further added. Molding may also be carried out by side-feeding the short fiber-reinforced resin pellet or long fiber-reinforced resin pellet, for example, from the vent port of an injection molding machine, feeding other resins, for example, a polyolefin resin described in the item of <Polyolefin Resin (A)> from the hopper of the injection molding machine, and mixing them in an injection molding machine.

Molding may also be carried out by melt-kneading the polyolefin resin (A), the resin (B), the fiber (C), and the modified polyolefin resin (D) in an injection molding machine without preparing the short fiber-reinforced resin pellet and the long fiber-reinforced resin pellet. In this case, the fiber (C) may be fed from the hopper of an injection molding machine, or may be side-fed from, for example, the vent port of the injection molding machine.

The molded article of the present embodiment contains the composition (I). For example, the entire molded article of the present embodiment may be formed from the composition (I), or the molded article of the present embodiment may contain a part formed from the composition (I).

The above molded article is used in wide applications such as household articles such as daily necessities and recreation applications, general industrial applications, and industrial articles. Examples thereof include household appliance material parts, communication equipment parts, electrical parts, electronic parts, automobile parts, parts for vehicles other than automobiles, ocean vessels, aircraft materials, mechanical parts, building material-related members, civil engineering members, agricultural materials, power tool parts, foods containers, films, sheets, and fibers.

As the automobile part, the molded article can be developed in various sites such as power train parts (since heat resistance is improved), mechanism parts (since tensile creep resistance is improved), and outer panel parts (since bending characteristics are ameliorated), and is also applicable to other sites. Specific examples of part names include intake manifolds, oil pans, cylinder heads, cylinder head covers, engine covers, shrouds, mirror brackets, interior consoles, sliding roofs, sliding roof frames, front doors, back doors, slide doors, front end modules, door modules, fenders, wheel caps, gasoline tanks, belts, ceiling coverings, convertible tops, armrests, door trims, rear package trays, sun visors, wheel covers, mattress covers, air-bags, insulating materials, electric wire covering materials, electrical insulating materials, top layer materials, floor materials, corner walls, deck panels, covers, plywood, ceiling boards, partition boards, side walls, wallpapers, wall covering materials, exterior materials, interior materials, roof materials, acoustical insulation boards, and heat insulation boards.

Examples of the household appliance material part, communication equipment part, electrical part, and electronic part include business equipment and OA equipment such as battery mask parts (covers, trays, and module cases), printers, personal computers, word processors, keyboards, personal digital assistants (PDA), headphone stereos, mobile phones, telephones, facsimiles, copy machines, electronic cash registers (ECR), desktop calculators, electronic notebooks, electronic dictionaries, cards, holders, and stationeries; household appliances such as wash machines, refrigerators, vacuum cleaners, microwaves, lighting tools, game machines, irons, and kotatu; AV equipment such as TVs, VTRs, video cameras, radio cassette recorders, tape recorders, mini discs, CD players, speakers, and liquid crystal displays; connectors, relays, condensers, switches, printed wiring board, coil bobbins, semiconductor sealing materials, electric wires, cables, trances, deflecting yokes, distribution boards, and clocks.

Examples of the daily necessity include daily and sport necessities such as plywood, synthetic fiber plates, buckets, containers, bags, cases, goggles, skis, rackets, tents, bicycles, and musical instruments.

### Examples

Hereinafter, the present invention will be described in more detail with reference to Examples and Comparative Examples, but the present invention is not limited to the following Examples. In the following description, "part" represents "parts by mass".

The raw materials used in Examples and Comparative Examples and physical properties thereof are shown below.

Polyolefin Resin (A)
   · PP1: polypropylene
      J13B manufactured by Prime Polymer Co., Ltd., MFR (in accordance with JIS K7210, 230°C, 2.16 kg load): 220 g/10 min, melt viscosity η_{A} (250°C, 120/sec): 35.8 Pa·s
   · PP2: polypropylene
      S119 manufactured by Prime Polymer Co., Ltd., MFR (in accordance with JIS K7210, 230°C, 2.16 kg load): 60 g/10 min, melt viscosity η_{A} (250°C, 120/sec): 89.4 Pa·s
   · PP3: polypropylene
      J137G manufactured by Prime Polymer Co., Ltd., MFR (in accordance with JIS K7210, 230°C, 2.16 kg load): 30 g/10 min, melt viscosity η_{A} (250°C, 120/sec): 152 Pa·s
Polyamide Resin (B1)
   · PA6-1: polyamide 6
      CM1007 manufactured by Toray Industries, Inc., MFR (in accordance with JIS K7210, 230°C, 2.16 kg load): 67 g/10 min, melt viscosity η_{B} (250°C, 120/sec): 112 Pa·s
   · PA6-2: polyamide 6
      1013B manufactured by UBE Corporation, MFR (in accordance with JIS K7210, 230°C, 2.16 kg load): 30 g/10 min, melt viscosity η_{B} (250°C, 120/sec): 192 Pa·s
Polyester Resin (B2)
   · PBT: polybutylene terephthalate
      300FP manufactured by Polyplastics Co., Ltd., MFR (in accordance with JIS K7210, 230°C, 2.16 kg load): 3 g/10 min, melt viscosity η_{B} (250°C, 120/sec): 115 Pa·s
Fiber (C)
   · GF1: glass fiber chopped strand subjected to surface treatment with an acrylic sizing agent (length: 3 mm, filament diameter: 11 pm)
   · GF2: glass fiber chopped strand subjected to surface treatment with an acid-modified polypropylene-based sizing agent (length: 4 mm, filament diameter: 13 pm)
   · GF3: glass fiber chopped strand subjected to surface treatment with a urethane-based sizing agent (length: 3 mm, filament diameter: 11 µm)
   · CF: carbon fiber chopped strand subjected to surface treatment with a urethane-based sizing agent (length: 4 mm, filament diameter: 7 µm)
   · LGF1: glass fiber roving subjected to surface treatment with an acrylic sizing agent (filament diameter: 17 µm, number of TEX: 2400 g/1000 m)
   · LGF2: glass fiber roving subjected to surface treatment with an acid copolymer-based sizing agent (filament diameter: 17 µm, number of TEX: 2400 g/1000 m)
Modified Polyolefin Resin (D)
   · Modified PP: maleic acid-modified polypropylene
      ADMER, product number "AT2606", manufactured by Mitsui Chemicals, Inc., content of structure derived from maleic acid: 0.6% by mass
   · Modified EBR: maleic acid-modified α-olefin copolymer (maleic acid-modified ethylene-butene copolymer)
      TAFMER, product number "MH7020", manufactured by Mitsui Chemicals, Inc., content of structure derived from maleic acid: 0.7% by mass
   · Modified SEBS: maleic acid-modified hydrogenated styrene-based thermoplastic elastomer
      Tuftec, product number "M1943", manufactured by Asahi Kasei Corporation
   · Modified PE: acrylic acid ester-glycidyl methacrylatemodified polyethylene
      Lotader, product number "AX8900", content of structure derived from maleic acid: 24% by mass

### [Example 1]

50 parts of PP1 as the polyolefin resin (A), 10 parts of PA6-1 as the polyamide resin (B1), and 0.1 parts of the modified PP as the modified polyolefin resin (D) were mixed by dry blending in advance and supplied to the hopper of a twin-screw melt-kneading extruder ("KZW15TW-30MG-NH" manufactured by Technovel Corporation, screw diameter: 15 mm, L/D = 30). Meanwhile, 40 parts of GF1 as the fiber (C) were supplied to the twin-screw melt-kneading extruder. Heating and melt-kneading were carried out at a temperature of 250°C, to give a fiber-reinforced resin composition.

The fiber-reinforced resin composition obtained above was injection molded by using an injection molding machine ("EC75XIII" manufactured by Toshiba Machine Co., Ltd.,) under the injection conditions of a set temperature of 250°C and a mold temperature of 60°C, to give a strip test piece for evaluation tests (80 mm in length × 10 mm in width × 4 mm in thickness) and a dumbbell test piece for evaluation tests (in accordance with JIS K7139 (ISO 3176:93)) each made of the above fiber-reinforced resin composition.

### [Examples 2 to 19 and Comparative Examples 1 to 8]

The fiber-reinforced resin compositions and test pieces were produced under the same conditions as Example 1, except that the blending composition was changed as described in Table 1 to Table 5. The numerical values with respect to the components shown in Table 1 to Table 5 are the amounts blended in terms of parts by mass. In Examples 16 to 19 and Comparative Example 8, the polyester resin (B2) was blended instead of the polyamide resin (B1).

The following evaluation tests were carried out by using these test pieces. The results are shown in Tables 1 to 5.

### [Example 20]

PP1 as the polyolefin(A), PA6-1 as the polyamide resin (B1), and the modified PP as the modified polyolefin resin (D) were blended in parts by mass shown in Table 6 and charged into the hopper of the twin-screw melt-kneading extruder in which the temperature was adjusted to 295°C. In addition, the glass fiber roving (LGF2) shown in Table 1 as the fiber (C) was extended and opened at such a speed that the amount of the glass fiber roving became the amount in parts by mass described in Table 6, the resin components from the extruder (that is, the mixture of the polyolefin (A), the polyamide resin (B1), and the modified polyolefin resin (D)) were supplied to an impregnation die with the above glass fiber and impregnated into the glass fiber. Thereafter, the glass fiber impregnated with the resin components was cooled and solidified, and then cut into a 9 mm pellet length by a strand cutter. The fiber-reinforced resin composition in pellet form obtained was injection molded in the same manner as in Example 1, to give a strip test piece for evaluation tests (80 mm in length × 10 mm in width × 4 mm in thickness) and a dumbbell test piece for evaluation tests (in accordance with JIS K7139 (ISO 3176:93)) each made of the fiber-reinforced resin composition.

The following evaluation tests were carried out by using these test pieces. The results are shown in Table 6.

### [Examples 21 to 24 and Comparative Examples 9 to 10]

The fiber-reinforced resin compositions and test pieces were produced under the same conditions as Example 20, except that the blending composition was changed as described in Table 6. The numerical values with respect to the components shown in Table 6 are the amounts blended in terms of parts by mass.

The following evaluation tests were carried out by using these test pieces. The results are shown in Table 6.

### <Evaluation of Heat Distortion Temperature>

Measurement of heat distortion temperature was carried out with an "automatic HDT tester" manufactured by Toyo Seiki Seisaku-sho, Ltd. in accordance with ISO 751-1 (1.8 MPa load) by using the strip test piece for evaluation tests.

### <Evaluation of Bending Test>

The bending test was conducted in accordance with ISO 178 by using the strip test piece for evaluation tests, and the flexural modulus FM (MPa) and flexural strength FS (MPa) in the stress-strain curve were determined.

### <Evaluation of Tensile Creep Strain>

Measurement of tensile creep strain was conducted by using the above dumbbell test piece for evaluation tests of JIS K7139 as the test piece under the conditions of an initial stress of 5.0 MPa, a test temperature of 80°C and 120°C, and a test time of 100 hours. Provided that, in Examples 14 to 24 and Comparative Examples 5 to 10, measurement was conducted in the same manner except that the initial stress was changed to 20 MPa and the test temperature was set to 80°C.

In addition, by using the resin components except for the fiber (C) used in each Example and Comparative Example, the impregnation properties into glass fibers were evaluated as follows. This evaluation was used as the evaluation of the impregnation properties in the fiber-reinforced resin composition obtained in each Example and Comparative Example. Concurrently, the evaluation of melt viscosity was carried out by the following method.

### <Evaluation of Impregnation Properties>

Evaluation of impregnation properties was carried out by using the mold shown in Figure 1, installing the roving glass fiber (fiber diameter: 17 µm, number of TEX: 2400 g/1000 m) on installation spaces 1 and 2 with 14 mm in width, 250 mm in length, 4 mm in depth, and fixing the roving glass fiber to a frame with springs by clipping.

Only the resin components other than the fiber (C) described in each Example and Comparative Example were melt-kneaded by the twin-screw melt-kneading extruder described in Example 1, and the kneaded sample was press molded at 270°C, to give a pressed film having a thickness of 100 µm. The press sheet prepared (thickness: 100 pm) was cut out into two strips with 14 mm in width and 200 mm in length, and these strip press sheets were installed on each roving glass fiber installed on the installation spaces 1 and 2. A mold lid was put thereon and pressed by a hand press ("MP-WCH" manufactured by Toyo Seiki Seisaku-sho, Ltd.), to give samples. The press conditions were such that the press temperature was set to 280°C, a pressure of 5 MPa was applied, and preheating was carried out for 10 minutes, and thereafter, a pressure of 10 MPa was applied and heating was carried out for 2 minutes. Only the central portion of the obtained roving glass fiber after the resin impregnation was cut out and fired in an electric furnace ("FO300" manufactured by Yamato Scientific co., ltd.) at 500°C for 1 hour, and the mass of the remaining glass fiber was measured. The glass fiber proportion (% by mass) in the sample was determined by the following formula based on the mass of the glass fiber before and after firing.

Glass fiber proportion (%) = {mass of only grass fiber after firing}/{mass of grass fiber containing impregnated resin before firing} × 100

The impregnation properties of the kneaded product of only the resin components containing no fiber into the glass fiber were evaluated based on the glass fiber proportion in the sample. Here, impregnation properties were evaluated based on the following criteria.

Evaluation criteria for impregnation properties
O: Glass fiber mass proportion (% by mass) in the sample is less than 80% by mass
X: Glass fiber mass proportion (% by mass) in the sample is 80% by mass or more

Since the resin kneaded product having inferior impregnation properties has poor permeability into glass fibers, the resin kneaded product melts while the resin is not impregnated into glass fibers even by pressing, and diffuses in a mold. Thus, the glass fiber mass proportion in the sample after firing is high.

### <Evaluation of Fluffing>

100 pellets were randomly collected from the pellets each obtained in Examples 20 to 24 and Comparative Examples 9 to 10, and the state of fluffing was evaluated. The pellets were subjected to a milling test for a predetermined time (5 seconds) and pulverized, and the occurrence state of fluff was observed. When a part to which the resin is not attached is present in the roving GF in the pellets, the part fluffs after the milling test, and the pellets after pulverization swell. The pellets in which swelling occurred were evaluated as X, the pellets in which swelling slightly occurred were evaluated as Δ, and the pellets in which almost no swelling was observed were evaluated as O.

### <Evaluation of Melt Viscosity>

· Melt viscosity ratio η_{A}/η_{B}
   With respect to the polyolefin resin (A) and the resin (B), the melt viscosities η_{A} and η_{B} at 250°C and a shear rate of 120/sec were respectively measured in accordance with JIS K7199:1999 (ISO 11443:1995), and the ratio of η_{A} to η_{B} was calculated.
· Melt viscosity of resin pellets of composition in which only resin components in composition (I) other than fiber (C) were melt-kneaded

The melt viscosity at 250°C and a shear rate of 120/sec was measured in accordance with JIS K7199:1999 (ISO 11443:1995) by using the resin pellets of the composition used in the evaluation of impregnation properties in which only the resin components of the composition (I) other than the fiber (C) were melt-kneaded.

**[Table 1]**

| | | Ex. 1 | Ex. 2 | Ex. 3 | Ex. 4 | Ex. 5 |
|---|---|---|---|---|---|---|
| Polyolefin resin (A) | PP1 | 50 | 33 | 33 | 33 | 33 |
| | PP2 | | | | | |
| | PP3 | | | | | |
| Polyamide resin (B1) | PA6-1 | 10 | 27 | 27 | 27 | 27 |
| Fiber (C) | GF1 | 40 | | 40 | 40 | |
| | GF2 | | | | | |
| | GF3 | | 40 | | | 40 |
| | CF | | | | | |
| Modified polyolefin resin (D) | Modified PP | 0.1 | 0.1 | 0.5 | 0.7 | 0.5 |
| Proportion of resin (B) to total of resin (A) and resin (B) (% by mass) | | 17 | 45 | 45 | 45 | 45 |
| Heat distortion temperature | (°C) | 165 | 199 | 170 | 167 | 177 |
| FM (Flexural modulus) | (MPa) | 8326 | 8520 | 9262 | 9132 | 9355 |
| FS (Flexural strength) | (MPa) | 103 | 150 | 156 | 157 | 157 |
| Creep (80°C, 5 MPa) | | 0.6 | 0.13 | 0.12 | 0.13 | 0.13 |
| Creep (120°C, 5MPa) | | Rupture (1) | 0.19 | 0.18 | 0.18 | 0.15 |
| Impregnation properties | | ○ | ○ | ○ | ○ | ○ |
| n_{A}/η_{B} | | 0.32 | 0.32 | 0.32 | 0.32 | 0.32 |
| Melt viscosity of resin components other than fiber (C) in composition (I) (250°C 120/sec) | (Pa·s) | 40 | 47 | 55 | 62 | 55 |

| | | Ex. 6 | Ex. 7 | Ex. 8 | Ex. 9 | |
|---|---|---|---|---|---|---|
| Polyolefin resin (A) | PP1 | 21 | 21 | 33 | | |
| | PP2 | | | | 33 | |
| | PP3 | | | | | |
| Polyamide resin (B1) | PA6-1 | 39 | 39 | 27 | 27 | |
| Fiber (C) | GF1 | 40 | | | 40 | |
| | GF2 | | | 40 | | |
| | GF3 | | 40 | | | |
| | CF | | | | | |
| Modified polyolefin resin (D) | Modified PP | 0.5 | 0.5 | 0.5 | 0.1 | |
| Proportion of resin (B) to total of resin (A) and resin (B) (% by mass) | | 65 | 65 | 45 | 45 | |
| Heat distortion temperature | (°C) | 201 | 200 | 172 | 196 | |
| FM (Flexural modulus) | (MPa) | 9205 | 9661 | 9160 | 8343 | |
| FS (Flexural strength) | (MPa) | 226 | 215 | 149 | 149 | |
| Creep (80°C, 5 MPa) | | 0.10 | 0.11 | 0.12 | 0.13 | |
| Creep (120°C, 5MPa) | | 0.15 | 0.13 | 0.15 | 0.18 | |
| Impregnation properties | | ○ | ○ | ○ | ○ | |
| ηA /ηB | | 0.32 | 0.32 | 0.32 | 0.8 | |
| Melt viscosity of resin components other than fiber (C) in composition (I) (250°C 120/sec) | (Pa·s) | 115 | 115 | 55 | 85 | |

| | | | | | | |
|---|---|---|---|---|---|---|
| (1) Unmeasurable due to rupture of test piece | | | | | | |

**[Table 2]**

| | | Comp. Ex. 1 | Comp. Ex. 2 | Comp. Ex. 3 | Comp. Ex. 4 |
|---|---|---|---|---|---|
| Polyolefin resin (A) | PP1 | 33 | 33 | | |
| | PP2 | | | | |
| | PP3 | | | 33 | 21 |
| Polyamide resin (B1) | PA6-1 | 27 | 27 | 27 | 39 |
| Fiber (C) | GF1 | 40 | 40 | 40 | 40 |
| | GF2 | | | | |
| | GF3 | | | | |
| | CF | | | | |
| Modified polyolefin resin (D) | Modified PP | 0 | 1 | 0.5 | 0.5 |
| Proportion of resin (B) to total of resin (A) and resin (B) | (% by mass) | 45 | 45 | 45 | 65 |
| Heat distortion temperature | (°C) | 198 | 165 | 174 | 201 |
| FM (Flexural modulus) | (MPa) | 8139 | 9170 | 9176 | 8872 |
| FS (Flexural strength) | (MPa) | 146.2 | 156 | 149 | 225 |
| Creep (80°C, 5 MPa) | | 0.14 | 0.15 | 0.13 | 0.10 |
| Creep (120°C, 5MPa) | | 0.2 | 0.2 | 0.18 | 0.16 |
| Impregnation properties | | ○ | ○ | X | X |
| ηA /ηB | | 0.32 | 0.32 | 1.36 | 1.36 |
| Melt viscosity of resin components other than fiber (C) in composition (I) (250°C 120/sec) | (Pa·s) | 44 | 63 | 135 | 150 |

**[Table 3]**

| | | Ex. 10 | Ex. 11 | Ex. 12 | Ex. 13 |
|---|---|---|---|---|---|
| Polyolefin resin (A) | PP1 | 28 | 14 | 21 | 28 |
| | PP2 | | | | |
| | PP3 | | | | |
| Polyamide resin (B1) | PA6-1 | 52 | 26 | 39 | 52 |
| Fiber (C) | GF1 | 20 | 60 | | |
| | GF2 | | | | |
| | GF3 | | | | |
| | CF | | | 20 | 40 |
| Modified polyolefin resin (D) | Modified PP | 0.5 | 0.5 | 0.5 | 0.5 |
| Proportion of resin (B) to total of resin (A) and resin (B) (% by mass) | | 65 | 65 | 65 | 65 |
| Heat distortion temperature | (°C) | 192 | 203 | 169 | 152 |
| FM (Flexural modulus) | (MPa) | 4935 | 12716 | 10757 | 9661 |
| FS (Flexural strength) | (MPa) | 127 | 173 | 216 | 193 |
| Creep (80°C, 5 MPa) | | 0.13 | 0.13 | 0.10 | 0.11 |
| Creep (120°C, 5MPa) | | 0.19 | 0.20 | 0.15 | 0.17 |
| Impregnation properties | | ○ | ○ | ○ | ○ |
| ηA /ηB | | 0.32 | 0.32 | 0.32 | 0.32 |
| Melt viscosity of resin components other than fiber (C) in composition (I) (250°C 120/sec) | (Pa·s) | 115 | 115 | 115 | 115 |

**[Table 4]**

| | | | Ex. 14 | Ex. 15 | Comp. Ex. 5 | Comp. Ex. 6 | Comp. Ex. 7 |
|---|---|---|---|---|---|---|---|
| Polyolefin resin (A) | | PP1 | 33 | 33 | 33 | 33 | |
| | | PP2 | | | | | |
| | | PP3 | | | | | 33 |
| Resin (B) | Polyamide resin (B1) | PA6-1 | 27 | 27 | | | 27 |
| | | PA6-2 | | | 27 | 27 | |
| | Polyester resin (B2) | PBT | | | | | |
| Fiber (C) | | GF1 | | | | | |
| | | GF2 | 40 | 40 | 40 | 40 | 40 |
| | | LGF1 | | | | | |
| | | LGF2 | | | | | |
| Modified polyolefin resin (D) | | Modified EBR | 0.5 | | | | |
| | | Modified SEBS | | 0.5 | | | |
| | | Modified PP | | | 0.1 | 0.5 | 0.5 |
| | | Modified PE | | | | | |
| Proportion of resin (B) to total of resin (A) and resin (B) | | (% by mass) | 45 | 45 | 45 | 45 | 45 |
| Heat distortion temperature | | (°C) | 196 | 180 | 182 | 167 | 167 |
| FM (Flexural modulus) | | (MPa) | 9026 | 9276 | 7994 | 9033 | 8311 |
| FS (Flexural strength) | | (MPa) | 143 | 138 | 133 | 141 | 125 |
| Creep (80°C, 20MPa) | | | 0.33 | 0.30 | 0.40 | 0.38 | 0.35 |
| Impregnation properties | | | ○ | ○ | X | X | X |
| ηA/ηB | | | 0.3 | 0.3 | 0.2 | 0.2 | 1.9 |
| Melt viscosity of resin components other than fiber (C) in composition (I) (250°C 120/sec) | | (Pa·s) | 37 | 38 | 53 | 63 | 109 |

**[Table 5]**

| | | | Ex. 16 | Ex. 17 | Ex. 18 | Ex. 19 | Comp. Ex. 8 |
|---|---|---|---|---|---|---|---|
| Polyolefin resin (A) | | PP1 | 50 | 33 | 33 | 21 | 33 |
| | | PP2 | | | | | |
| | | PP3 | | | | | |
| Resin (B) | Polyamide resin (B1) | PA6-1 | | | | | |
| | | PA6-2 | | | | | |
| | Polyester resin (B2) | PBT | 10 | 27 | 27 | 39 | 27 |
| Fiber (C) | | GF1 | 40 | 40 | 40 | 40 | 40 |
| | | GF2 | | | | | |
| | | LGF1 | | | | | |
| | | LGF2 | | | | | |
| Modified polyolefin resin (D) | | Modified EBR | | | | | |
| | | Modified SEBS | | | | | |
| | | Modified PP | | | 0.5 | | |
| | | Modified PE | 0.1 | 0.5 | | 0.5 | 0.0 |
| Proportion of resin (B) to total of resin (A) and resin (B) | | (% by mass) | 17 | 45 | 45 | 65 | 45 |
| Heat distortion temperature | | (°C) | 160 | 163 | 164 | 190 | 164 |
| FM (Flexural modulus) | | (MPa) | 8963 | 6464 | 9739 | 9900 | 8996 |
| FS (Flexural strength) | | (MPa) | 75 | 86 | 94 | 117 | 78 |
| Creep (80°C, 20MPa) | | | 0.3 | 0.3 | 0.3 | 0.2 | 0.4 |
| Impregnation properties | | | ○ | ○ | ○ | ○ | ○ |
| ηA/ηB | | | 0.3 | 0.3 | 0.3 | 0.3 | 0.3 |
| Melt viscosity of resin components other than fiber (C) in composition (I) (250°C 120/sec) | | (Pa·s) | 23 | 40 | 38 | 53 | 30 |

**[Table 6]**

| | | | Ex. 20 | Ex. 21 | Ex. 22 | Ex. 23 | Ex. 24 |
|---|---|---|---|---|---|---|---|
| Polyolefin resin (A) | | PP1 | 50 | 21 | 33 | 22 | 33 |
| | | PP2 | | | | | |
| | | PP3 | | | | | |
| Resin (B) | Polyamide resin (B1) | PA6-1 | 10 | 39 | 27 | 28 | 27 |
| | | PA6-2 | | | | | |
| | Polyester resin (B2) | PBT | | | | | |
| Fiber (C) | | GF1 | | | | | |
| | | GF2 | | | | | |
| | | LGF1 | | | | | 40 |
| | | LGF2 | 40 | 40 | 40 | 50 | |
| Modified polyolefin resin (D) | | Modified EBR | | | | | |
| | | Modified SEBS | | | | | |
| | | Modified PP | 0.1 | 0.5 | 0.5 | 0.5 | 0.5 |
| | | Modified PE | | | | | |
| Proportion of resin (B) to total of resin (A) and resin (B) | | (% by mass) | 17 | 65 | 45 | 56 | 45 |
| Heat distortion temperature | | (°C) | 165 | 210 | 194 | 200 | 177 |
| FM (Flexural modulus) | | (MPa) | 9425 | 10417 | 9921 | 11831 | 9988 |
| FS (Flexural strength) | | (MPa) | 160 | 200 | 180 | 220 | 197 |
| Creep (80°C, 20MPa) | | | 0.20 | 0.10 | 0.14 | 0.10 | 0.13 |
| Impregnation properties | | | ○ | ○ | ○ | ○ | ○ |
| Evaluation of fluffing in pellets | | | ○ | ○ | ○ | ○ | ○ |
| ηA/ηB | | | 0.3 | 0.3 | 0.3 | 0.3 | 0.3 |
| Melt viscosity of resin components other than fiber (C) in composition (I) (250°C 120/sec) | | (Pa·s) | 22 | 50 | 35 | 35 | 35 |

| | | | Comp. Ex. 9 | | Comp. Ex. 10 | | |
|---|---|---|---|---|---|---|---|
| Polyolefin resin (A) | | PP1 | 33 | | | | |
| | | PP2 | | | | | |
| | | PP3 | | | 33 | | |
| Resin (B) | Polyamide resin (B1) | PA6-1 | | | 27 | | |
| | | PA6-2 | 27 | | | | |
| | Polyester resin (B2) | PBT | | | | | |
| Fiber (C) | | GF1 | | | | | |
| | | GF2 | | | | | |
| | | LGF1 | 40 | | 40 | | |
| | | LGF2 | | | | | |
| Modified polyolefin resin (D) | | Modified EBR | | | | | |
| | | Modified SEBS | | | | | |
| | | Modified PP | 0.5 | | 0.5 | | |
| | | Modified PE | | | | | |
| Proportion of resin (B) to total of resin (A) and resin (B) | | (% by mass) | 45 | | 45 | | |
| Heat distortion temperature | | (°C) | 168 | | 169 | | |
| FM (Flexural modulus) | | (MPa) | 9442 | | 9425 | | |
| FS (Flexural strength) | | (MPa) | 183 | | 170 | | |
| Creep (80°C, 20MPa) | | | 0.16 | | 0.25 | | |
| Impregnation properties | | | X | | X | | |
| Evaluation of fluffing in pellets | | | Δ | | X | | |
| ηA/ηB | | | 0.2 | | 1.9 | | |
| Melt viscosity of resin components other than fiber (C) in composition (I) (250°C 120/sec) | | (Pa·s) | 63 | | 109 | | |

## Claims

1. A fiber-reinforced resin composition comprising:
a polyolefin resin (A);
one or more resins (B) selected from the group consisting of a polyamide resin (B1) and a polyester resin (B2) ;
a fiber (C); and
a modified polyolefin resin (D),
wherein
a content of the polyolefin resin (A) is 5 to 60 parts by mass, a content of the resin (B) is 5 to 60 parts by mass, and a content of the fiber (C) is 10 to 70 parts by mass per 100 parts by mass of a total content of the polyolefin resin (A), the resin (B), and the fiber (C);
a content of the modified polyolefin resin (D) is 0.05 to 0.95 parts by mass per 100 parts by mass of the total content of the polyolefin resin (A), the resin (B), and the fiber (C); and
a ratio η_{A}/η_{B} of a melt viscosity η_{A} of the polyolefin resin (A) at 250°C and a shear rate of 120/sec to a melt viscosity η_{B} of the resin (B) at 250°C and a shear rate of 120/sec is in a range of 0.3 to 1.3.

2. The fiber-reinforced resin composition according to claim 1, wherein the resin (B) is the polyamide resin (B1).

3. The fiber-reinforced resin composition according to claim 1 or 2, wherein the polyamide resin (B1) is polyamide 6.

4. The fiber-reinforced resin composition according to any one of claims 1 to 3, wherein the content of the resin (B) is 8 to 92 parts by mass per 100 parts by mass of a total content of the polyolefin resin (A) and the resin (B).

5. The fiber-reinforced resin composition according to any one of claims 1 to 4, wherein the polyolefin resin (A) is polypropylene.

6. The fiber-reinforced resin composition according to any one of claims 1 to 5, wherein the fiber (C) is one or more selected from a glass fiber and a carbon fiber.

7. A molded article comprising the fiber-reinforced resin composition according to any one of claims 1 to 6.

8. The molded article according to claim 7, wherein the molded article is an automobile part.
